(19) Europäisches Patentamt
European Patent Office
Office européen des brevets

(11) **EP 4 567 057 A1**

(12) **EUROPEAN PATENT APPLICATION**

(43) Date of publication:
**11.06.2025 Bulletin 2025/24**

(21) Application number: **23215261.1**

(22) Date of filing: **08.12.2023**

(51) International Patent Classification (IPC):
**C08J 5/18** (2006.01)   **B29C 55/00** (2006.01)
**B29C 59/00** (2006.01)   **B29D 7/01** (2006.01)

(52) Cooperative Patent Classification (CPC):
**C08J 5/18; B29C 55/00; B29D 7/01; C08J 7/0427;**
B29C 59/02; C08J 2367/02; C08J 2483/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mondi AG**
**1030 Wien (AT)**

(72) Inventor: **KREKEL, Rolf**
**83064 Raubling (DE)**

(74) Representative: **Puchberger & Partner**
**Patentanwälte**
**Reichsratsstraße 13**
**1010 Wien (AT)**

(54) **STRUCTURED AND ORIENTED FILM AND METHOD OF MANUFACTURING THEREOF**

(57)   The present disclosure relates to a thermoplastic film for a release liner (1), the film comprising: a carrier layer being an oriented thermoplastic polymer layer; wherein, the carrier layer is structured to a depth of at least 5 μm; wherein, the carrier layer has a crystallinity of at least 15%.

**Fig. 1**

EP 4 567 057 A1

## Description

### Technical field

The present invention relates to a thermoplastic film for a release liner, the film comprising a carrier layer which is an oriented thermoplastic polymer layer, and which is structured to a depth. The present invention also relates to a respective method for manufacturing a thermoplastic film for a release liner.

### Background

Increasing globalization goes hand in hand with growing waste disposal. Among many other industrial sectors, the packaging industry and/or the industry providing for the decoration of products also aim at reducing waste production, while maintaining, and even improving the properties and functionality of the products.

Take for instance, a release liner, which is a sheet or a film that is coated with a release agent (such as silicon) on one or both sides, designed to prevent sticking to an adhesive or the like, such that the release liner can facilitate revealing/peeling off. Such release liners can be used for many different applications, including but not limited to graphic arts, tapes, envelopes, industrial use cases, fiber composites, medical, hygiene, labels or the like. Some release liners are also embossed, which is a process of creating raised or recessed patterns on the surface of one or more films comprised by the release liner. Said embossing may in general terms be referred to as structuring in here.

Such a film-based embossed release liner should have certain properties to provide a consistent release performance, for instance, being secure and stable, allow easy application, and also being cost-effective to manufacture. Therefore, it is desired that these products can be easily recycled, can provide sufficient mechanical properties and can provide certain surface properties, such as haptic properties. In addition, these products should be thermally stable.

In the prior art, attempts have been made to meet these requirements.

For instance, release liners that are based on a polyethylene (PE) layer, a primer layer and a silicone (Sil) layer are known. The silicone layer can be coated on one or both sides of the release liner, typically on the outermost sides of the release liner. Said silicone layer provides release properties against adhesives, which is appreciated to enable the release liner to function properly. Moreover, some release liners may be based on one or more of the foregoing layers and comprise an additional polyethylene-terephthalate (PET) layer. Typically, two PE layers may be provided on outer sides of the release liner thereby sandwiching the PET layer. Such PE layers typically have a low crystallinity and can thereby be easily embossed (structured), for instance via a structured chill roll. The following example 1 shows such a layer structure of the prior art:

1. (Sil)/PE(structured)/Primer/PET(structured)/Primer/PE/Sil

Furthermore, some release liners comprise an embossed PET layer; however, such embossing of the rather rigid PET layer cannot be done to a sufficient depth. The following example 2 shows such a layer structure of the prior art:

2. (Sil)/PET(structured to a low depth)/Sil

Further known examples of embossed release liners are based on a plain film layer, a silicone layer, and a biaxially oriented (BO) based polymer (e.g., BOPP, BOPET, BOPA or BOPE). The following example 3 shows such a layer structure of the prior art:

3. Plain film - (Sil)/BOPET/Sil

However, the suggested solutions, according to the prior art, have several disadvantages. For instance, usage of PE in combination with a primer and PET as shown in the above example 1 constitutes a hybrid material composition and/or multilayer materials of different kinds of polymers. This plurality of layers is required for the PE layers to be extruded and anchored properly on the central PET layer. Such hybrid material composition creates difficulties in recycling and makes recycling less effective and more cost intensive. In addition, using a PE layer alone does not provide for thermal stability. Moreover, some of the suggested prior art solutions, for instance the ones using an embossed PET layer according to the above example 2 have substantial limitations in terms of an embossing depth. Such conventional PET layers cannot be structured to a high depth required for many applications. Moreover, unstructured layer structures as shown in the above example 3 do not provide sufficient mechanical properties. Furthermore, some of the prior art solutions reveal different mechanical properties due to different manufacturing processes required.

In view of the above drawbacks, it is important to provide improved films, for instance, films being used as release liners.

Thus, it is an object of the present invention to overcome the above-mentioned disadvantages at least partially.

**Summary of the invention**

The objects are achieved, at least partly, by a thermoplastic film and a method for manufacturing a film, according to the subject-matter of the independent claims. Preferred embodiments are subject of the dependent claims, and other suitable aspects of the present invention are described through the overall disclosure of the present application. Since the thermoplastic film and the method for manufacturing a thermoplastic film, both relate to thermoplastic films, it will be understood that advantages and/or features of the thermoplastic film may also apply to the method and vice versa.

Film

In particular, the object is achieved by a thermoplastic film for a release liner, the film comprising:

- a carrier layer being an oriented thermoplastic polymer layer;

> wherein, the carrier layer is structured to a depth of at least 5 $\mu$m;
> wherein, the carrier layer has a crystallinity of at least 15%.

This has the advantage that an improved thermoplastic film for a release liner can be provided. The thermoplastic film is thermally stable and provides enhanced mechanical properties. Moreover, the thermoplastic film may be relatively easy to recycle. Further, also said release liner comprising the thermoplastic film may be relatively easy to recycle. That may be the case, because the film may not need further and / or different kind of materials, since the carrier layer can provide for most of the desired thermal and mechanical properties. In particular, the film may be easily recycled as no cumbersome separation of different polymer compounds needs to be performed, as required by some films according to the prior art. The film being thermally stable may mean that it can withstand high temperatures without undergoing significant chemical or physical changes. The advantage of such a thermally stable film is that it provides reliability and performance in high-temperature environments.

Moreover, attributable to the carrier layer being an oriented thermoplastic polymer layer, improved mechanical properties are provided. In addition, due to the carrier layer having a crystallinity of at least 15%, the film is provided with further improved mechanical properties, in particular increased stiffness, strength, and abrasion resistance. Further, thermal stability of the film is enhanced, as a higher crystallinity leads to a higher melting temperature. Overall, this improves the longevity of the film and broadens the range of applicability of the film. For instance, the tensile strength may be significantly higher in said oriented thermoplastic polymer layer with such a crystallinity compared to unoriented films of the same material and/or of a lower crystallinity. Further, elongation may be lower.

In the prior art, usually only unoriented layers, such as unoriented thermoplastic polymer layers are structured. Thus, in the prior art, such unoriented layers need to be provided on a central layer in order to provide both advantages, i.e., structuring and sufficient mechanical stability. However, this comes at the expense of recyclability, as described elsewhere in this document. This lack of recyclability may be caused due to the hybrid material as described in the background section. It is noted that structuring in the prior art films would usually not be possible to such a great extent as proposed in here, when said structuring is applied to an oriented thermoplastic polymer. Typically, such oriented thermoplastic polymers may only be structed to a low extent (e.g., lower than about 5 $\mu$m).

The inventors now found that the combination of the recyclability, the mechanical strength, the thermal stability, and the ability of being structured can be provided by way of the proposed thermoplastic film in here. In turn, the proposed thermoplastic film provides excellent material properties and recyclability.

The structuring, such as the structuring to a depth of at least 5 $\mu$m, as described herein has, in particular in the context of a release liner, the following advantages: structuring can enhance the release properties of the liner by creating microchannels or pockets in the surface. In some cases, this structuring may aid minimizing direct contact between the release liner and an adhesive. However, mostly direct contact between the release liner and the adhesive may be advantageous. For this, the structures (which can be understood as positive structures, i.e., elevations) may be filled with an adhesive (which may form a negative of the release liner corresponding to the positive structure thereof), for instance an adhesive with a specific viscosity. This adhesive layer (with the negative structure) in combination with a substrate (e.g., a PVC film) may be referred to as an adhesive article and can then be applied on a surface (e.g., car hood or the like). This adhesive article may be easily movable (e.g., slide able and/or repositionable) on the surface. That is, because the structuring may provide the adhesive with a minimal initial contact area to the surface (e.g., car hood or the like). When the adhesive article is pressed further on the surface, the negative structuring in the adhesive may be configured such that air egress is enabled, as the negative structure may form channels. These channels may be formed in the adhesive where positive structures in the release liner are present. Further details as to advantages of the depth of the structuring in the carrier layer may be derivable from EP 3 838 591 A1.

Air egress refers to the ability of trapped air bubbles to escape when applying adhesive films. This may be particularly important for applications like graphics or decals, where a smooth and bubble-free application is desired. Moreover, structured release liners may offer increased conformability to irregular or textured surfaces. The structuring can help the release liner flex and mold to contours of a substrate, leading to better adhesion and an improved finish. Further, structuring may create a thicker release liner profile, which can provide a buffer or cushioning effect between an adhesive and the release liner. This may be advantageous in applications where the adhesive needs protection or where the release liner needs to withstand pressure and/or any kind of external impact. As a further example, structuring may aid in facilitating the repositioning of the thermoplastic film. In one example, the structuring may comprise embossing as described elsewhere herein and in particular in the context of the method.

The depth as referred to herein, i.e., when the carrier layer is said to be structured to a depth, may be measured along a straight line perpendicular to a main surface of the film.

The properties of polymers may be influenced by their degree of crystallization. The higher the degree of crystallization, the stiffer and stronger the polymer. Further, the degree of crystallinity for a polymer may also affect physical properties such as storage modulus, permeability, density, and melting point.

The "crystallinity" as referred to in here can be measured based on the method as described in B. Wunderlich, Thermal Analysis, Academic Press, 1990, pp. 417-431, which is commonly known to the skilled person but briefly described elsewhere herein without limiting the scope of protection. In this manner, the crystallinity referred to herein can be easily reworked and / or measured by the skilled person.

Various methods are known to the skilled person in order to determine the "depth" to which the carrier layer is structured. For instance, a surface roughness device may be employed in order to determine the depth specified in here. For instance, a perthometer may be employed, which is an instrument designed to measure surface roughness and profile parameters. These instruments may be used in quality control, manufacturing, and other applications where understanding the depths, such as a surface roughness of a material or product is needed.

The thermoplastic film provided in here may be used for a release liner, as further described elsewhere herein. Particular examples of applications are graphic art, tapes, envelopes, industrial use cases, fiber composites, medical, hygiene, labels or the like. Examples of graphic art may be advertising films, traffic signs, car wrapping and structured liners. In terms of fiber composites, suitable use cases may be aerospace construction components, and consumer recreational products.

The thermoplastic film may, alternatively or additionally, be used in different fields of the industry, which are not particularly limited to release liners. In some of these fields, it is appreciated to add a barrier layer. Further examples of use cases of the thermoplastic film as described herein include the food industry, pet cares, and home and personal care. The thermoplastic film may be part of products used therein, such as products relating to cheese and dairy, crisps and snacks, fresh and processed meat, fish and poultry, frozen food, sugar and confectionery, tea and coffee, dry pet food, snacks and treats for pet care, wet pet food, cleaning products, detergents, hygiene, personal care and cosmetics. The thermoplastic film may be used in industrial applications such as layers for use in windows and/or other products that may need functional surfaces, such as sport devices, interleaving layer, laminates (such as continuous pressure laminate CPL, or high-pressure laminate HPL). Further use cases may be in mould decoration, sheet mould compound SMC, bulk mould compound BMC or the like.

The term "oriented" thermoplastic polymer may comprise at least mono and biaxially oriented thermoplastic polymers as described elsewhere herein in greater detail.

It is understood that the described advantages may apply also for the following preferred embodiments.

General features

Preferably, the carrier layer has a crystallinity of at least 17%, preferably at least 20%, more preferably at least 22%, more preferably at least 24%, more preferably at least 26%, most preferably at least 30%.

This further adds to the advantages mentioned above. In particular, the thermoplastic film is thus provided with enhanced mechanical strength and thermal stability, which improves longevity and processability of the thermoplastic film. In addition, heat driven, secondary process steps may be performed and optimized by using a film with high crystallinity.

Preferably, the carrier layer is structured to a depth of at least 10 $\mu$m, preferably at least 15 $\mu$m, preferably at least 20 $\mu$m, most preferably at least 25 $\mu$m.

A greater depth has the advantage of enhancing the release properties of the liner by creating microchannels or pockets in the surface. These channels may aid in providing a direct contact between the release liner and an adhesive as described further above. This may facilitate peeling off. Further, a greater depth contributes to ornamental or other surface features. In particular, movement, such as repositioning of the film is facilitated as described above.

Preferably, the carrier layer comprises or consists of a thermoplastic polymer selected from a list comprising polyester, polyolefin, and polyamide (PA), wherein, optionally, polyester comprises polyethylene-terephthalate (PET), in particular recycled PET (rPET), polybutylene-terephthalate (PBT), polyethylene-furanoate (PEF), polyhydroxy-butyrate (PHB), polylactide (PLA), polyethylene-naphthalate (PEN), and the like, wherein, optionally, polyolefin comprises polyethylene (PE), polypropylene (PP) and the like.

These materials can facilitate an economically more efficient process and can make a valuable contribution to higher sustainability. Further, recycling may be improved as some or all of the materials allow mechanical recycling, which is a quite efficient recycling process. PET provides heat stability, flatness and optical transparency.

As an example, PEF is becoming more and more popular as it is bio-based and offers advantages in terms of thermal and barrier properties. Further, it is appreciated that also bio-degradable polyesters can be used according to the present invention. The term "bio-degradable" as used herein, may be understood as plastics that can be decomposed by the action of living organisms. Example of such bio-degradable polyester may be PHB, which is particularly attractive because of its compostable characteristics. It is noticed that usage of PLA as a further example of a bio-degradable polyester is also of growing importance as it can be economically produced from renewable resources.

Preferably, the carrier layer has been structured before being oriented.

This facilitates structuring since it is more difficult to structure an oriented carrier layer instead of an unoriented carrier layer. Such structuring may be easily performed with a heat-driven structuring process. This may be a cost-effective process.

The skilled person will readily recognize if a carrier layer is structured before or after it is being oriented by performing suitable investigations to the product. For instance, orientation influences the crystallinity of the product and in case structuring is performed after the carrier layer has been oriented, this will be recognizable.

Without the intend to limit the scope of protection, it is noted that the order in which the carrier layer (being thermoplastic polymer layer) is structured, either before or after orientation, indeed affects the final properties and appearance of the structured carrier layer. That may be understood as follows: when a polymer is oriented, the polymer chains are aligned substantially in one direction. Orientation may be performed through stretching or any other suitable mechanical processes. The orientation process can change the physical and mechanical properties of the polymer, such as its tensile strength, clarity, and transparency. If structuring is done after orientation, the combination of the benefits of the present disclosure (higher structuring depths as well as the provision of a thermally stable film) may not be achieved.

Hence, it is beneficial when the carrier layer is structured before it is oriented. For instance, structuring before orientation can result in the structured areas being less affected by the orientation process. The structured areas may therefore retain more of the original polymer's properties, such as its mechanical strength and / or transparency.

Release layer

Preferably, the thermoplastic film is further comprising a release layer applied on the carrier layer, wherein the release layer is preferably a layer of silicone.

The release layer has the advantage that it can facilitate that the thermoplastic film may be used as part of a release liner. For instance, the release layer may provide a releasable surface. Thereby, an optional layer (which may include a printing) could be applied between the carrier layer and the release layer. Further, an adhesive may be provided on top of the release layer. In addition, a substrate (e.g., a PVC substrate as described elsewhere herein) may be provided on top of the adhesive including an optional print on top of the substrate The release layer may facilitate removal from the remaining layers by way of the releasable surface. In a non-limiting example, the layer structure may be as follows: carrier layer (structured) / optional printing layer / release layer / adhesive / substrate (e.g., PVC) / optional printing layer.

The release layer may be applied on any arbitrary side of the carrier layer. In some examples, another layer may be between the carrier layer and the release layer.

Using silicone has the advantage that mature technologies can be used to produce the thermoplastic film. Thus, using silicone facilitates the manufacturing process. Further, tinted silicones may be applied. In addition, silicone aids in providing a releasable surface as described above.

In a particular example, the release layer may comprise dimethylsiloxane and / or poly(dimethylsiloxane). Dimethylsiloxane is a common structural unit found in silicone polymers, and it is often referred to as a siloxane or siloxane linkage. Silicones are synthetic polymers made up of repeating silicon-oxygen (Si-O) bonds, often with organic groups, such as methyl ($CH_3$) or phenyl ($C6H_5$), attached to the silicon atoms.

Preferably, the release layer is coated to the carrier layer, preferably by a wet coating process.

This simplifies the manufacturing of the thermoplastic film. Different kinds of coating processes may be applicable and are encompassed by the present disclosure. For instance, an embossing roll or a chill roll may be used for coating. A wet coating process refers to a method of applying a liquid coating or layer onto a substrate, typically in a liquid state, which is later cured or dried to form a solid and adherent finish.

Dimensions and mechanical properties

Preferably, the carrier layer has a thickness of at least 10 $\mu$m, preferably at least 20 $\mu$m, preferably at least 30 $\mu$m, preferably at least 40 $\mu$m, preferably at least 20 $\mu$m, and/or of at most 200 $\mu$m, preferably at most 150 $\mu$m, preferably at most 120 $\mu$m, preferably at most 100 $\mu$m, preferably at most 80 $\mu$m.

This thickness of the carrier layer was found to be advantageous in that structures of a sufficient depth can be imparted to the carrier layer. This makes the film particularly useful in the many applications described herein.

It is noted that the carrier layer referred to herein is the carrier layer of the thermoplastic film, i.e., the final product. As described elsewhere herein, the thermoplastic film is manufactured according to a manufacturing process, during which different thicknesses may pertain. In particular, it is noted that the thickness referred to herein is the thickness after orientation, i.e., after stretching.

Preferably, the carrier layer has a tensile strength of at least 100 N/mm$^2$, preferably at least 120 N/mm$^2$, more preferably at least 140 N/mm$^2$, most preferably at least 160 N/mm$^2$, when measured in a cross direction (CD) of the carrier layer.

This has the advantage that the carrier layer and, thereby, the thermoplastic film has sufficient mechanical properties to withstand impacts due to handling and/or due to the environment.

The tensile strength as referred to herein may be the maximum stress that the carrier layer can withstand while being stretched or pulled before breaking. Such tensile strength may be measured along a machine direction (MD) or a cross direction (CD) of the carrier layer. Exemplarily, test conditions for films and sheets according to DIN EN ISO 527/3 and/or ASTM D882 may be used to derive the tensile strength as disclosed herein.

Method

The objects are further achieved, at least partly by a method for manufacturing a thermoplastic film for a release liner, such as a film as described elsewhere herein, the method comprises the following steps:

- providing a thermoplastic polymer layer having a first crystallinity, preferably being in an amorphous state;
- structuring the thermoplastic polymer layer, preferably to a depth of at least 50 $\mu$m;
- stretching the structured thermoplastic polymer layer for providing an oriented thermoplastic polymer layer;

wherein stretching comprises heating the structured thermoplastic polymer layer such that it has a second crystallinity, being greater than the first crystallinity.

It is understood that substantially the same advantages and features mentioned with respect to the thermoplastic film equally apply to the method for manufacturing a thermoplastic film. Further, the features may be combined and/or interchangeably applied to aspects, embodiments and examples of the thermoplastic film and the method, respectively. The respective advantages of the method are described herein with respect to the thermoplastic film.

Further adding to the advantages, it was found important when stretching the structured thermoplastic polymer layer is performed. This means that the layer is structured before it is oriented.

In one example, structuring may comprise embossing, in particular melt-embossing. Said embossing as generally known may be performed with pressure and / or heat. It is generally noted that any other suitable structuring methods are certainly possible and encompassed in the present disclosure.

Structuring the thermoplastic polymer layer may in other examples preferably be performed to a depth of at least 60 $\mu$m, 80 $\mu$m, 100 $\mu$m, 110 $\mu$m, 120 $\mu$m, 130 $\mu$m, or at least 140 $\mu$m.

The amorphous state referred to herein may be a state in which the crystallinity of the thermoplastic polymer layer may be at most 10%, preferably at most 8%, most preferably at most 6%.

Heating has the advantage that the crystallinity of the oriented polymer is increased. This facilitates that mechanical properties and thermal stability are increased.

Stretching comprises heating the structured thermoplastic polymer layer. This means that heating may be performed at the same time as stretching. Nevertheless, in some examples, heating may also be slightly shifted timewise with respect to stretching.

It is noted that heating during stretching may be performed for any period of time. As a non-limiting example, it is mentioned that heating may be performed for at least 5 seconds, preferably at least 10 seconds, preferably at least 15 seconds, preferably at least 20 seconds, preferably at least 30 seconds, and / or for at most 120 seconds, preferably at most 100 seconds, more preferably at most 80 seconds, more preferably at most 60 seconds. It is noted that the time for heating may vary depending on the desired outcome.

Preferably, the method comprises further method steps so as to provide the features mentioned in the context of the thermoplastic film. In addition, some of the method steps are described in the following preferred embodiments.

Preferably, heating comprises heating the structured thermoplastic polymer layer to at least 50°C, preferably at

## EP 4 567 057 A1

least 60°C, preferably at least 70°C, preferably at least 80°C, preferably at least 90°C, and / or to at most 120°C, preferably at most 110°C, preferably at most 100°C, most preferably at most 95°C.

These temperatures of the structured thermoplastic polymer layer during heating, on the one hand, have proven to be adequate to provide sufficient crystallinity (higher temperatures of the structured thermoplastic polymer layer may be desirable). On the other hand, the temperatures of the structured thermoplastic polymer layer during heating should not be too high in order to reduce manufacturing expenses (lower temperatures of the structured thermoplastic polymer layer may be desirable). Thus, the inventors found that an optimal range of temperatures according to the values specified in here.

Preferably, stretching comprises stretching the structured thermoplastic polymer layer in a first direction and / or in a second direction, the second direction preferably being substantially perpendicular to the first direction, the first direction preferably being a machine direction, MD, the second direction preferably being a cross direction, CD.

Preferably, stretching comprises stretching the structured thermoplastic polymer layer in the first direction and / or in the second direction by a factor of at least 2, preferably at least 2.5, more preferably at least 3, and / or of at most 20, preferably at most 15, preferably at most 10, preferably at most 8, preferably at most 5, preferably at most 4 with respect to the length in the respective direction before stretching.

Stretching by a factor of 2 in one direction means that its length is, for instance 2 units of length after stretching when it is 1 unit of length before stretching. The maximum stretching factor of 20 may apply to a combination of the stretching in the first and the second direction. For instance, a stretching factor in the first direction may be 4 and a stretching factor in the second direction may be 5. In combination, the stretching factor may thus be 20 (4 times 5).

Preferably, stretching the structured thermoplastic polymer layer in the first direction and the second direction is performed substantially simultaneously.

Preferably, the method is further comprising annealing the stretched structured thermoplastic polymer layer,

wherein annealing comprises heating the stretched structured thermoplastic polymer layer at a temperature of at least 100°C, preferably at least 120°C, preferably at least 140°C, preferably at least 160°C, preferably at least 180°C, preferably at least 200°C, most preferably at least 210°C, and/or
heating the structured thermoplastic polymer layer to at most 260°C, preferably at most 240°C, most preferably at most 230°C.

Annealing has the advantage that stress on the product due to the crystallized structure may be reduced. Annealing may bring the product to a more relaxed state. This was found advantageous for providing improved properties. During annealing, substantially no crystallization may take place. Nevertheless, further crystallization may occur due to cool-down after annealing.

It is preferred, when the temperature of annealing is slightly lower than the melting point of a respective material. For instance, when PE is used, the temperature should be about 100°c. When PLA is used, the temperature should be about 130-140°C. The melting point of a material, such as a polymer, may be the temperature at which the material, specifically the crystalline regions within the material, changes from a solid to a liquid state. It is associated with the temperature at which the ordered, crystalline regions of the material begin to break down, and the material becomes a molten material.

Preferably, the stretched structured thermoplastic polymer has a crystallinity of at least 17%, preferably at least 20%, more preferably at least 22%, more preferably at least 24%, more preferably at least 26%, most preferably at least 30%. This may correspond to the second crystallinity described elsewhere herein. It is to note that these values may vary depending on which polymer is employed.

Preferably, structuring the thermoplastic polymer layer comprises structuring to a depth of at least 80 $\mu$m, preferably at least 100 $\mu$m, preferably at least 120 $\mu$m, preferably at least 140 $\mu$m, and / or of at most 200 $\mu$m, preferably at most 180 $\mu$m, preferably at most 150 $\mu$m. It is understood that this is the depth before the thermoplastic polymer layer is stretched. After stretching, the depth may be similar as described elsewhere herein with regard to the thermoplastic film.

Preferably, the method comprises pre-heating the structured thermoplastic polymer layer before stretching and after structuring, preferably for a time between 10 and 120 seconds, more preferably between 20 and 90 seconds, most preferably between 30 and 60 seconds. This pre-heating step may be a purely optional step.

Preferably, annealing takes place for a time of at least 1 second, preferably at least 2 seconds, preferably at least 5 seconds, preferably at least 8 seconds, preferably at least 10 seconds, and/or annealing takes place for a time of at most 60 seconds, preferably at most 40 seconds, most preferably at most 30 seconds.

## Brief description of the accompanying embodiments

In the following, preferred embodiments are described, by way of example only. Reference is made to the following accompanying figures:

Fig. 1    shows a schematic cross-section of a thermoplastic film according to an embodiment of the invention.

Fig. 2    shows a schematic cross-section of a thermoplastic film according to a further embodiment of the invention.

Fig. 3    shows a schematic flow chart of a method according to an embodiment of the invention.

**Detailed description of the embodiments**

Definitions

The machine direction (MD) as used herein may be understood as the direction into which a machine, e.g., a belt, is running when a layer, film or the like is manufactured and/or in which the manufactured material is rolled.

The cross direction (CD) may be understood as substantially rectangular to the MD. It may also, or alternatively, be referred to as the traverse direction. To further illustrate the MD and CD, the following may be helpful and readily known by the skilled person: if a layer, film or the like has substantially the same physical properties in both directions (e.g., MD and CD), the layer, film or the like may be referred to as isotropic.

Unless otherwise stated, the term "substantial" or "substantially" as used in the present context may be understood to a great or significant extent or for the most part or essentially. In particular, manufacturing tolerances are included by this term.

The enthalpy of melting (e.g., referred to as ΔH_melting in here) of a substance, also known as (latent) heat of fusion, is the change in its enthalpy resulting from providing energy, typically heat, to a specific quantity of the substance to change its state from a solid to a liquid, at constant pressure.

An amorphous polymer means that the polymer may be an unordered monomer chain. In contrast to this, crystallinity may correspond to ordered monomer chains. 0% crystallinity may be a fully amorphous polymer. It is noted that a higher degree of crystallinity can still mean that there are amorphous areas within the polymer.

A coating as referred to herein may involve applying a layer of material onto a substrate's surface to achieve specific properties or functionalities. Coatings can be applied in various forms, including liquids, powders, or films. The purpose of coating can vary widely, from adding protective layers to altering surface characteristics. Coatings can provide benefits such as improved adhesion, scratch resistance, waterproofing, UV protection, or even aesthetic enhancements.

Figures

Subsequently, presently preferred embodiments will be outlined, primarily with reference to the above Figures. It is noted that further embodiments are certainly possible, and the below explanations are provided by way of example only, without limitation. Further, the present invention can also be used in other embodiments not explicitly disclosed hereafter. Moreover, as detailed below, the embodiments are compatible with each other, and individual features of one embodiment may also be applied to another embodiment.

Throughout the present figures and specification, the same reference numerals refer to the same elements. The figures may not be to scale, and the relative size, proportions, and depiction of elements in the figures may be exaggerated for clarity, illustration, and convenience.

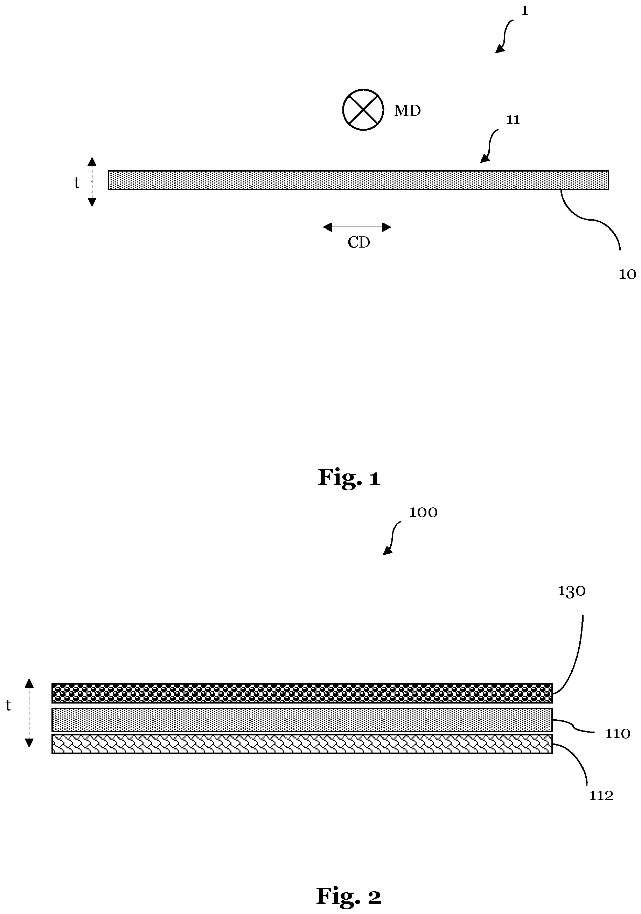

**Fig. 1** shows film 1 for a release liner. The film 1 comprises a carrier layer 10. The carrier layer 10 is an oriented thermoplastic polymer layer. Further, the carrier layer 10 is structured to a depth of at least 5 μm. Thereby, a structure 11 or a plurality of structures 11 (in the following the plural form will be used without the intention to limit the scope of protection) is provided as indicated in Fig. 1. The structure 11 may be inherent to the carrier layer 10, meaning that any additional parts, such as fillers or the like that contribute to a surface structure may not necessarily mean that the carrier layer 10 is structured to a certain depth as specified in here. The carrier layer 10 has a crystallinity of at least 15%.

Due to the carrier layer 10 having a crystallinity of at least 15%, the film 1 is provided with sufficient mechanical strength, which improves its longevity and broadens the range of applicability of the film 1. In addition, the structuring creating the structures 11 helps in providing a plurality of advantages mentioned elsewhere herein. Typically, the high degree of crystallinity of such an oriented thermoplastic polymer may only allow for structures to a low depth (e.g., lower than about 5 μm). The inventors found a way to overcome this disadvantage.

In addition, the provided thermoplastic film 1 is in particular a thermally stable thermoplastic film 1 that makes it useful in any applications that require - among others -heat resistance.

Moreover, the thermoplastic film 1 has the advantage that no chemical or energetic recycling may be necessary. The film 1 can be recycled by way of mechanical recycling means, which is a mature technique, easy to handle and cost-effective. Thus, the efficiency of recycling is improved significantly.

Moreover, in some cases, said structures 11 can add visual appeal, creating a textured and/or patterned surface that can contribute to the overall aesthetics of the product, such as a release liner. This may be appreciated for premium or decorative applications. Furthermore, said structures 11 can introduce a degree of anti-slip and/or anti-skid properties to the product, which can be useful in applications where the product needs to maintain its position or substantially prevent movement. Moreover, said structures 11 can reinforce the product, making it more resistant to tearing or punctures. This can be important for products that need to withstand handling, shipping, or other forms of stress. Furthermore, said structures 11 can be customized to create specific patterns, textures, or logos on the product, allowing for branding or functional enhancements tailored to the application's requirements.

The depth may be measured substantially in the direction of the thickness t (as indicated in Fig. 1). As described elsewhere herein, a perthometer may be employed in order to measure the depth. The specific features and capabilities of a perthometer may vary depending on the model and version. A perthometer can make use of various probes, styluses, and measurement techniques to assess surface roughness and profile characteristics such as Ra (average roughness), Rz (mean roughness depth), and more. The depth referred to herein may be the mean roughness depth (Rz). Various manufacturers of such perthometers are known, all of which may be applicable in determining the depth described herein. As an example, Hommel Etamic or Mahr may be mentioned as a suitable manufacturer of such devices.

The carrier layer 10 can have a crystallinity of at least 17%, preferably at least 20%, more preferably at least 22%, more preferably at least 24%, more preferably at least 26%, most preferably at least 30%. This further increases thermal stability, contributes to enhanced chemical resistance, a lower gas permeability, improved dimensional stability, a higher insulation and a higher solvent resistance, enhanced transparency and improved wear resistance.

The carrier layer 10 can be structured so as to provide structures 11 to a depth of at least 10 $\mu$m, preferably at least 15 $\mu$m, preferably at least 20 $\mu$m, most preferably at least 25 $\mu$m.

The carrier layer 10 comprises or consists of a thermoplastic polymer selected from a list comprising polyester, polyolefin, and polyamide (PA), wherein, optionally, polyester comprises polyethylene-terephthalate (PET), polybutylene-terephthalate (PBT), polyethylene-furanoate (PEF), polyhydroxy-butyrate (PHB), polylactide (PLA), polyethylene-naphthalate (PEN), and the like, wherein, optionally, polyolefin comprises polyethylene (PE), polypropylene (PP) and the like.

The carrier layer 10 may have been structured in order to provide structures 11 before being oriented.

The carrier layer 10 can have a thickness t (as indicated in Fig. 1) of at least 10 $\mu$m, preferably at least 20 $\mu$m, preferably at least 30 $\mu$m, preferably at least 40 $\mu$m, preferably at least 20 $\mu$m, and/or of at most 200 $\mu$m, preferably at most 150 $\mu$m, preferably at most 120 $\mu$m, preferably at most 100 $\mu$m, preferably at most 80 $\mu$m.

The carrier layer 10 has a tensile strength of at least 100 N/mm$^2$, preferably at least 120 N/mm$^2$, more preferably at least 140 N/mm$^2$, most preferably at least 160 N/mm$^2$, when measured in a cross direction CD of the carrier layer 10. It is understood that this value may vary depending on the polymer used. The cross direction CD is indicated in Fig. 1 by way of an example. Further still, the machine direction MD is indicated by the circle and the cross. As can be seen, the machine direction MD is directed into the image plane.

The carrier layer 10 may be a mono oriented thermoplastic polymer. A mono oriented thermoplastic polymer may be a polymer that is stretched so as to orientate the polymeric chains parallel to one another (e.g., a first direction). Preferably, the chains are oriented to the machine direction (MD). Such mono oriented polymers may have the advantage that they can be produced in a cost-effective and simplified manner. Further, for some applications, easy tear properties in one direction may be desired, for which mono oriented polymers have proven to be beneficial.

The carrier layer 10 may be a biaxially oriented thermoplastic polymer. A biaxially oriented (BO) thermoplastic polymer may be a polymer that is stretched so as to orientate the polymeric chains parallel to one another along a first direction and in a direction substantially perpendicular to the first direction. Such orientation exhibits improved clarity, high tensile properties, improved flexibility and toughness. Further, improved barrier properties may be attributable to such an orientation. In addition, improved oil and grease resistance can be achieved.

Fig. **2** shows a thermoplastic film 100 according to a further embodiment of the invention. The film 100 comprises a carrier layer 110 as described in the embodiment of Fig. 1. Reference sign 110 of Fig. 2 correspond to the element referred to by reference sign 10 of Fig. 1. In this manner, it is understood that for instance also carrier layer 110 comprises structures 11 (although not indicated for brevity).

The film 100 further comprises a release layer 130 applied on the carrier layer 110. The release layer 130 comprises a layer of silicone coating. Any kind of silicone may be used. The release layer 130 can be coated to the carrier layer 100, preferably by a wet coating process. In one example, the silicone is curable, e.g., by heat and/or UV.

Preferably, the film 100 may not need any additional coating layer. Nonetheless, the film 100 may comprise a printing layer 112, preferably the printing layer 112 may be arranged on the back side of the carrier layer 110 (below carrier layer 110 in Fig. 2).

This may improve the appearance, which is appreciated by a consumer. The printing layer 112 is not limited to any specific printing but can comprise any kind of printing. The printing layer 112 may be particularly designed for special applications and/or use cases.

Printing of the printing layer 112 may be performed by any kind of printing techniques, such as rotogravure printing, flexography, digital printing, offset printing, inkjet printing and/or laser marking.

Further layers are certainly encompassed by the thermoplastic film 1, 100 of the present disclosure and the thermoplastic film 1, 100 is not limited to the ones presented in the figures. For instance, any further layer of polyester, polyolefin, bonding lacquer, silicone, a barrier layer, or the like may be comprised by the film 1, 100. A barrier layer may at least partially prevent a fluid, particle or the like from passing through the film 1, 100. This may aid in increasing shelf life. Further, the barrier layer may be useful to protect against environmental impacts, such as wind, water, fire, rain, oil or the like.

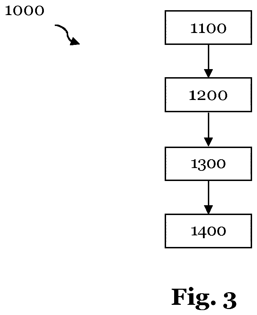

Fig. 3 shows a schematic flow chart of method 1000 for manufacturing a thermoplastic film 1, 100 for a release liner, such as a film 1, 100 as described in Figs. 1 and 2. according to an embodiment of the invention. The method 1000 comprises the following steps:

- Providing 1100 a thermoplastic polymer layer having a first crystallinity, preferably being in an amorphous state;
- Structuring 1200 the thermoplastic polymer layer, preferably to a depth of at least 50 $\mu$m;
- Stretching 1300 the structured thermoplastic polymer layer for providing an oriented thermoplastic polymer layer, wherein stretching 1300 comprises heating 1400 the structured thermoplastic polymer layer such that it has a second crystallinity, being greater than the first crystallinity.

The method 1000 can comprise further method steps as described elsewhere herein, in particular in the summary section further above.

The method has the advantage that the polymer layer can be easily structured. This particularly applies when it is provided in an amorphous state. Further, stretching (i.e., orienting) the structured layer (i.e., after structuring the layer) in a first and / or a second direction results in the structures 11 being less affected by the stretching process. Thereby, the structures 11 may retain more of the original polymer's properties. Heating during stretching has the advantage that the layer crystallizes, such that the second crystallinity can be achieved, i.e., such that a higher crystallinity compared to the first crystallinity can be achieved.

Structuring is performed before stretching (i.e., orienting). This is particularly beneficial since the structured areas can be provided with unique properties and / or with a different appearance from the surrounding material. Structuring after stretching is a more challenging process because the material is already stretched and resists deformation more than unstretched material.

Determination of crystallinity

As described elsewhere herein, the "crystallinity" referred to in here is based on the method as described in B. Wunderlich, Thermal Analysis, Academic Press, 1990, pp. 417-431, which is commonly known to the skilled person but briefly described in the following without limiting the scope of protection. Determining said crystallinity relies on a comparison of a differential scanning calorimetry (DSC) measurement with a 100% reference value.

In more detail and without the intention of limiting the scope of protection, it is noted that the differential scanning calorimetry (DSC) is a technique which measures heat flow into or out of a material as a function of time or temperature. The crystallinity of the material can be determined with DSC by quantifying the heat associated with melting (which may also be termed fusion). Said heat associated with melting may be referred to as enthalpy of melting ($\Delta$H_melting) of the material. This heat is reported as percentage (%) crystallinity by ratioing said heat against the heat of melting of a 100% crystalline sample of the same material ($\Delta$H_reference) to obtain relative values. Alternatively, said heat may be rationed more generally against a material of known crystallinity. In particular, the heat-flux DSC method has been applied in determining the crystallinity referred to in the present disclosure. It is noted that alternatively the power differential DSC method may be employed which can lead to similar results. With the heat-flux DSC method, the changes in heat flow are calculated by integrating a reference temperature ($\Delta$Tref) curve. Crystallinity K was determined based on the following equation (1):

$$K = \Delta H\_melting / \Delta H\_reference \quad (1)$$

Examples of crystallinity from the open literature

The following examples may be mentioned which can be retrieved from the open literature. The enthalpy of melting for 100 % crystalline PE is 293 J/g ($\Delta$H_reference) and for PP 207 J/g ($\Delta$H_reference).

For an exemplary LDPE material, an enthalpy of melting ($\Delta$H_melting) of 136.3 J/g can be determined. This results in a calculated crystallinity for LDPE of 46.5 %.

For an exemplary HDPE material, an enthalpy of melting ($\Delta$H_melting) of 217.4 J/g can be determined. This results in a calculated crystallinity for HDPE of 74.2 %.

For an exemplary PP material, an enthalpy of melting (ΔH_melting) of 102 J/g can be determined. This results in a calculated crystallinity for PP of 49.3 %.

The skilled person understands that in some examples, a post-crystallization needs to be taken into account. In such cases, the enthalpy of post-crystallization (ΔH_pc) is subtracted from the enthalpy of melting (ΔH_melting) and divided by the reference value (ΔH_reference) in order to obtain the crystallinity K_pc (notation "_pc" added to indicate that post-crystallization is taken into account) according to the following equation (2):

$$K\_pc = (\Delta H\_melting - \Delta H\_pc) / \Delta H\_reference \quad (2)$$

As an example, for PET, the enthalpy of post-crystallization ΔH_pc (40.29 J/g) and is subtracted from the enthalpy of melting ΔH_melting (42.83 J/g) and divided by the reference value (140 J/g).

Further examples of the thermoplastic film

The inventors conducted various tests. Some of these tests are presented in the following, which should give a broad understanding the proposed thermoplastic film and the method as described herein without wishing to be bound by theory and/or to be limited to these specific examples, which are merely preferred embodiments.

The crystallinity of an unstructured amorphous carrier layer being a PET layer (ΔH_melting = 35.76 J/g; ΔH_pc = 27.58 J/g; ΔH_reference = 140 J/g) was determined to be K = 5.8%.

The crystallinity of an unstructured biaxially oriented carrier layer being a PET layer (ΔH_melting = 51 J/g; ΔH_pc = 0 J/g; ΔH_reference = 140 J/g) was determined to be K = 36.4%.

Further examples of the film 1 of the present invention, and their resultant physical properties are listed in the following table 1. It is emphasized that the following further examples merely serve to provide an understanding of the invention. The examples are by far not to be understood such that the claims are limited to these specific examples and / or materials used.

**TABLE 1**: Further examples 1, 2, and 3 of films according to preferred embodiments invention. Example o is a structured PET layer that is not stretched (i.e., not oriented). The Fmax MD and Fmax CD values were measured according to DIN EN ISO 527/3 and/or ASTM D882 test protocols. It is noted that the depth was determined using Hommel Etamic W5 as the perthometer (the test length was 15 mm, and the scanning speed was 1 mm/sec). The depth was determined based on the mean roughness depth (Rz). The crystallinity was determined based on the B. Wunderlich method, as described elsewhere herein.

| Example | 0 | 1 | 2 | 3 |
|---|---|---|---|---|
| **Name** | PET, structured, not stretched | PET, structured, stretched | PET, structured, stretched | PET, structured, stretched |
| **Thickness [μm]** | 483 | 40 | 137 | 49 |
| **Fmax MD [N/mm²]** | n/a | 189 | n/a | 205 |
| **Fmax CD [N/mm²]** | n/a | 165 | n/a | 170 |
| **Crystallinity [%]** | 7.8 | 24.1% | 30.8 | 28.5 |
| **Structure depth [μm]** | 64.6 | 6.57 | 23.64 | 9.04 |
| **Stretch ratio [MD X CD]** | 1 × 1 (no stretching) | 4 × 4 | 2x2 | 3.7 x 3.7 |

Not all data of all samples have been determined, which is indicated by way of the n/a. However, various different samples were tested, but not all of them have been incorporated herein for brevity only.

In the above examples 1, 2, and 3, the heating temperature during stretching was 92°C. Further, the film's dimensions in each example 1, 2, and 3, were 70 mm x 70 mm before stretching.

In the above examples 1, 2, and 3, the annealing temperature was 220°C. Further, the time for annealing was 5 seconds (example 1), and 10 seconds (examples 2 and 3).

In the above examples 1, 2, and 3, a PET carrier layer was employed. PET layers generally provide strong mechanical properties and a higher heat resistance than other films like HDPE, PP or a PCK ((Sil)/PE/Paper/PE/Sil). Sil = Silicone.

It is noted that the above embodiments and examples may be combined with further aspects as described herein, and details of the embodiments and examples may also be omitted, as will be understood by the skilled person. The scope of protection is determined by the claims and is not limited by the embodiments and examples disclosed in the above figures.

It will be apparent to those skilled in the art that numerous modifications and variations of the described examples and embodiments are possible in light of the above teaching. The disclosed examples and embodiments are presented for purposes of illustration only. Other embodiments may include some or all of the features disclosed herein. Therefore, it is the intent to cover all such modifications and alternate embodiments as may come within the true scope of this invention.

**List of reference signs**

| | |
|---|---|
| 1 | thermoplastic film |
| 10 | carrier layer |
| 11 | structures |
| 100 | thermoplastic film |
| 110 | carrier layer |
| 112 | printing layer |
| 130 | release layer |
| MD | machine direction |
| CD | cross direction |
| t | thickness |
| 1000 | method |
| 1100 | method step: providing |
| 1200 | method step: structuring |
| 1300 | method step: stretching |
| 1400 | method step: heating |

**Claims**

1. A thermoplastic film for a release liner (1), the film comprising:

   - a carrier layer being an oriented thermoplastic polymer layer;

      wherein, the carrier layer is structured to a depth of at least 5 $\mu$m;
      wherein, the carrier layer has a crystallinity of at least 15%.

2. The thermoplastic film (1) according to the preceding claim, wherein, the carrier layer has a crystallinity of at least 17%, preferably at least 20%, more preferably at least 22%, more preferably at least 24%, more preferably at least 26%, most preferably at least 30%.

3. The thermoplastic film (1) according to any of the preceding claims, wherein the carrier layer is structured to a depth of at least 10 $\mu$m, preferably at least 15 $\mu$m, preferably at least 20 $\mu$m, most preferably at least 25 $\mu$m.

4. The thermoplastic film (1) according to any of the preceding claims, wherein the carrier layer consists of a thermoplastic polymer selected from a list comprising polyester, polyolefin, and polyamide (PA),

   wherein, optionally, polyester comprises polyethylene-terephthalate (PET), polybutylene-terephthalate (PBT), polyethylene-furanoate (PEF), polyhydroxy-butyrate (PHB), polylactide (PLA), polyethylene-naphthalate (PEN), and the like,
   wherein, optionally, polyolefin comprises polyethylene (PE), polypropylene (PP) and the like.

5. The thermoplastic film (1) according to any of the preceding claims, wherein the carrier layer has been structured before being oriented.

6. The thermoplastic film (1) according to any of the preceding claims, further comprising a release layer (130) applied on the carrier layer, wherein the release layer (130) is preferably a layer of silicone.

7. The thermoplastic film (1) according to any of the preceding claims, wherein the release layer is coated to the carrier layer, preferably by a wet coating process.

8. The thermoplastic film (1) according to any of the preceding claims, wherein the carrier layer has a thickness of at least 10 $\mu$m, preferably at least 20 $\mu$m, preferably at least 30 $\mu$m, preferably at least 40 $\mu$m, preferably at least 20 $\mu$m, and/or of at most 200 $\mu$m, preferably at most 150 $\mu$m, preferably at most 120 $\mu$m, preferably at most 100 $\mu$m, preferably at most 80 $\mu$m.

9. The thermoplastic film (1) according to any of the preceding claims, wherein the carrier layer has a tensile strength of at least 100 N/mm$^2$, preferably at least 120 N/mm$^2$, more preferably at least 140 N/mm$^2$, most preferably at least 160 N/mm$^2$, when measured in a cross direction, CD, of the carrier layer.

10. A method (1000) for manufacturing a thermoplastic film for a release liner, such as a film according to any one of the preceding claims, the method (1000) comprising the following steps:

   - providing a thermoplastic polymer layer having a first crystallinity, preferably being in an amorphous state;
   - structuring the thermoplastic polymer layer, preferably to a depth of at least 50 $\mu$m;
   - stretching the structured thermoplastic polymer layer for providing an oriented thermoplastic polymer layer;

   wherein stretching comprises heating the structured thermoplastic polymer layer such that it has a second crystallinity, being greater than the first crystallinity.

11. The method according to the preceding claim, wherein heating comprises heating the structured thermoplastic polymer layer to at least 50°C, preferably at least 60°C, preferably at least 70°C, preferably at least 80°C, preferably at least 90°C,
and / or heating the structured thermoplastic polymer layer to at most 120°C, preferably at most 110°C, preferably at most 100°C, most preferably at most 95°C.

12. The method according to any one of the preceding method claims, wherein stretching comprises stretching the structured thermoplastic polymer layer in a first direction and / or in a second direction, the second direction preferably being substantially perpendicular to the first direction,
the first direction preferably being a machine direction, MD, the second direction preferably being a cross direction, CD.

13. The method according to the preceding claim, wherein stretching comprises stretching the structured thermoplastic polymer layer in the first direction and / or in the second direction by a factor of at least 2, preferably at least 2.5, more preferably at least 3,
and / or of at most 20, preferably at most 15, preferably at most 10, preferably at most 8, preferably at most 5, preferably at most 4 with respect to the length in the respective direction before stretching.

14. The method according to any one of the preceding claims 12 or 13, wherein stretching the structured thermoplastic polymer layer in the first direction and the second direction is performed substantially simultaneously.

15. The method according to the preceding claim, further comprising annealing the stretched structured thermoplastic polymer layer,

   wherein annealing comprises heating the stretched structured thermoplastic polymer layer at a temperature of at least 100°C, preferably at least 120°C, preferably at least 140°C, preferably at least 160°C, preferably at least 180°C, preferably at least 200°C, most preferably at least 210°C, and/or
   of at most 260°C, preferably at most 240°C, most preferably at most 230°C.

1

⊗ MD

11

t

CD

10

**Fig. 1**

100

130

t

110

112

**Fig. 2**

1000

1100

1200

1300

1400

**Fig. 3**

Europäisches
Patentamt

European
Patent Office

Office européen
des brevets

# EUROPEAN SEARCH REPORT

**Application Number**

EP 23 21 5261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/001413 A1 (SEBALD INGRID [DE] ET AL) 5 January 2017 (2017-01-05) | 1-9 | INV. C08J5/18 |
| A | * paragraphs [0003], [0048], [0049]; claims; example B2; table III * | 10-15 | B29C55/00 B29C59/00 |
| | ----- | | B29D7/01 |
| A | US 2002/034610 A1 (PEREZ MARIO A [US] ET AL) 21 March 2002 (2002-03-21) * claims 1,7; example 1 * | 1-15 | |
| | ----- | | |
| A | WO 01/44398 A1 (3M INNOVATIVE PROPERTIES CO [US]) 21 June 2001 (2001-06-21) * page 13, line 27 – page 15, line 31; claims; example 1 * * page 9, lines 4-9 * | 1-15 | |
| | ----- | | |
| A | WO 2022/044052 A1 (BHATT P) 3 March 2022 (2022-03-03) * claim 1; example 1 * | 1-15 | |
| | ----- | | |

|  |
|---|
| **TECHNICAL FIELDS SEARCHED (IPC)** |
| C08J B29D B29C |

The present search report has been drawn up for all claims

| Place of search | Date of completion of the search | Examiner |
|---|---|---|
| Munich | 10 May 2024 | Frison, Céline |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 5261

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2024

| Patent document cited in search report | Publication date | Patent family member(s) | | Publication date |
|---|---|---|---|---|
| US 2017001413 A1 | 05-01-2017 | CA | 2942692 A1 | 24-09-2015 |
| | | CA | 2942699 A1 | 24-09-2015 |
| | | CA | 2942703 A1 | 24-09-2015 |
| | | CN | 106103078 A | 09-11-2016 |
| | | CN | 106103087 A | 09-11-2016 |
| | | CN | 106132701 A | 16-11-2016 |
| | | DK | 3119603 T3 | 11-04-2022 |
| | | EP | 3119603 A1 | 25-01-2017 |
| | | EP | 3119604 A1 | 25-01-2017 |
| | | EP | 3119605 A1 | 25-01-2017 |
| | | ES | 2907517 T3 | 25-04-2022 |
| | | HR | P20220369 T1 | 27-05-2022 |
| | | HU | E057921 T2 | 28-06-2022 |
| | | JP | 6500033 B2 | 10-04-2019 |
| | | JP | 2017509511 A | 06-04-2017 |
| | | JP | 2017511288 A | 20-04-2017 |
| | | JP | 2017512679 A | 25-05-2017 |
| | | LT | 3119603 T | 25-05-2022 |
| | | MY | 184928 A | 30-04-2021 |
| | | PL | 3119603 T3 | 25-04-2022 |
| | | PT | 3119603 T | 17-03-2022 |
| | | RS | 63071 B1 | 29-04-2022 |
| | | RU | 2016136846 A | 19-03-2018 |
| | | RU | 2016136847 A | 19-03-2018 |
| | | RU | 2016136848 A | 19-03-2018 |
| | | SI | 3119603 T1 | 29-07-2022 |
| | | US | 2017001413 A1 | 05-01-2017 |
| | | US | 2017001420 A1 | 05-01-2017 |
| | | US | 2017015478 A1 | 19-01-2017 |
| | | WO | 2015139843 A1 | 24-09-2015 |
| | | WO | 2015139844 A1 | 24-09-2015 |
| | | WO | 2015139845 A1 | 24-09-2015 |
| US 2002034610 A1 | 21-03-2002 | US | 2002034610 A1 | 21-03-2002 |
| | | WO | 03025049 A1 | 27-03-2003 |
| WO 0144398 A1 | 21-06-2001 | AU | 3884300 A | 25-06-2001 |
| | | EP | 1238032 A1 | 11-09-2002 |
| | | JP | 4668502 B2 | 13-04-2011 |
| | | JP | 2003516889 A | 20-05-2003 |
| | | US | 6432527 B1 | 13-08-2002 |
| | | WO | 0144398 A1 | 21-06-2001 |
| WO 2022044052 A1 | 03-03-2022 | US | 2024026189 A1 | 25-01-2024 |
| | | WO | 2022044052 A1 | 03-03-2022 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3838591 A1

**Non-patent literature cited in the description**

- **B. WUNDERLICH**. Thermal Analysis. Academic Press, 1990, 417-431